# EUROPEAN PATENT SPECIFICATION

(11) **EP 1 757 367 B1**
(45) Date of publication and mention of the grant of the patent: **31.03.2010**
(21) Application number: 06013886.4
(22) Date of filing: 05.07.2006
(51) Int. Cl.: B01L 3/00

(54) **Containers and methods for the automated handling of a liquid**
Probenbehälter und Verfahren zur automatischen Handhabung von Flüssigkeiten
Récipient et procédé pour le traitement automatisé des liquides

(30) Priority: 07.07.2005 EP 05106198
(43) Date of publication of application: 28.02.2007
(73) Proprietor: Roche Diagnostics GmbH, 68305 Mannheim (DE); F.HOFFMANN-LA ROCHE AG, 4070 Basel (CH)
(72) Inventor: D'Amore, Alessandro, 5610 Wohlen (CH); Mueller, Siegfried, 6344 Meierskappel (CH)
(74) Representative: Poredda, Andreas

(56) References cited:
- DE-A1- 10 333 197
- US-A- 5 382 408
- US-A1- 2003 102 323

## Description

### BACKGROUND OF THE INVENTION

The invention relates to a method for the automated handling of a fluid biological sample in an analytical instrument in the field of nucleic acid purification and amplification.

The invention further relates to a container and a tube suitable for the use in an analytical instrument, wherein a fluid biological sample is handled automatically as well as the instrument capable of handling and processing the fluid biological sample.

Moreover, the invention relates to a system capable of analyzing a biological sample by utilizing an instrument for the automated handling of a liquid in combination with a container in which the biological sample is processed.

The polymerase chain reaction (PCR) is an important and widespread method for amplification and analysis of nucleic acids. For performing PCR reactions reaction vessels have to fulfill a number of requirements. Vessels have to be tightly closed during PCR reaction to avoid evaporation of liquid from the vessel. Furthermore, the temperature of the liquid inside the vessel has to promptly follow the outside default temperature given by a heating and/or cooling installation stipulating certain thermal conduction properties upon the vessel material. In specific PCR applications optical measurements are carried out during the course of the amplification leading to particular optical requisites of the vessel material regarding transparency and auto-fluorescence.

For PCR applications a variety of embodiments for vessels are common. Whereas most of them exhibit a similar shape, namely, a tube comprising a reversibly closable opening on the one end and a conically tapered permanently closed second end, several embodiments regarding the closure, the spacial alignment and/or the combination of tubes are known. Thus, closures may be firmly attached to the tube or may be provided by a separate cap portion. Furthermore, besides their use as single vessels particular vessels may be combined and arranged to form plates comprising 96 or 384 cavities or strips comprising 6 or 8 tubes.

Such an arrangement of reaction vessels is described in EP 0642828, wherein a first part comprising reaction vessels of identical shape and dimension set up annularly and a second part comprising closures suitable for closing the reaction vessels gas-tightly also arranged annularly form a disposable arrangement of reaction vessels for carrying out temperature cycling of a liquid mixture. While these closures are placed into the openings to tightly seal the tube, EP 0907083 displays a sample cup, which can be closed by a removable and screwable cap. Another vessel systems for treating and/or storing liquids is disclosed in US 20040234422 comprising a two-dimensional vessel arrangement with a plurality of vessels which are open at the top and which are interconnected to form a unit, and a two-dimensional closure arrangement which has an arrangement of closure elements corresponding to the vessel arrangement and by means of which the openings of the vessels can be closed.

Disposable polypropylene tubes for performing PCR typically have a lower conical portion and an upper cylindrical portion, wherein the lower portion contacts a correspondingly shaped hole in a heating block and has a substantially thinner wall than that of the upper portion of the tube. EP 1275438 discloses that the wall thickness of the conical section is in the range from 0.009 to 0.012 inches (0.2286 to 0.3048 mm) plus or minus 0.001 inches (0.0254 mm) with 0.012 inches (0.3048 mm) being the mostly preferred embodiment, while the wall angle relative to the longitudinal axis of the tube is typically 17° in the lower conical portion.

US 5382408 discloses a microcentrifuge tube having a container having a round opening and a frictionally seated lid being dimensioned to cover the opening and being hingedly connected to the container. The lid has a lid extension extending upwardly from the lid surface and outwardly away from the hinge in such a manner which allows the lid to be unseated and moved from the opening of the container. Said frictionally seated lid has the disadvantage that the retention force of the lid on the tube is mainly depending on the diameter of the annular lid seal (on the underside of the lid) respectively on the diameter of the round opening of the microcentrifuge tube and tends to vary, which is typical for injection molded parts. This might become even a major disadvantage when an internal pressure in the tube causes a force against the lid.

US 5577626 discloses a closure having a base for attachment to a container at the opening and a lid being hingedly connected to the base. The lid has an outwardly projecting engaging member whereby the user can release the latch and apply a force to the engaging member to lift the lid via the member. However, such closures are not useful for automated opening the lid as it requires two simultaneous movements: release of the latch and at the same time lift the lid via member. After a first little move of the lid, the object releasing the latch has to remove, which represents a further inconvenience for automated opening.

As automatic preparation and processing of biological samples is advantageous in many cases and becomes increasingly important, many PCR tubes available are adapted to the needs of fully automated procedures in robotic apparatuses. However, only few PCR vessels are capable of being fully automatically closable. EP 0907083 discloses such a vessel and an apparatus for automatically handling sample cups closed with a screwable cap, wherein the apparatus is characterized in that it comprises a rotatable gripper tool apt to enter and engage with a recess of a vessel cap to form a connection which can be locked by rotating the gripper tool in a first sense and unlocked by rotating the gripper tool in a second sense opposite to the first. Besides, US 5578494 describes a method for opening and closing a cap pivotally mounted on a container for storing reagents for the use in an automated analytical instrument by an actuating device.

All of these embodiments for the fully automated opening and closing of vessels have the common disadvantage, that there is one single closure for each single opening. Thus, in fully automated processes a multitude of single movements have to be performed leading to an increased complexity of the diagnostic process and thereby to decreased reliability. Moreover, with increasing complexity and increasing number of single movements the risk of spilling of liquid from the vessel drastically increases. Another disadvantage of these embodiments is speed and low operational capacity of automated processes as every single tube has to be opened successively. Furthermore, common PCR vessels applicable for fully automated closure either comprise screw tops or bayonet sockets demanding a robotic capable of rotary motions, which constructively is very complex and costly.

Furthermore, the problem of providing a sealing device to form a gas-tight seal for the efficient performance of analytical techniques such as the polymerase chain reaction has been addressed in US 5721136 describing a multilayer composite sheet of material seals consisting of an elastically or inelastically deformable sealing layer having a tacky surface calendared or cast onto a relatively thin backing layer made up from any substance with low permeability to water vapor. This multilayer composite sheet may be placed over the openings of one or more reaction vessels in order to simultaneously seal one or more vessels for thermal cycling. Besides, EP 0836884 describes a seal for one or more vessels consisting of two elastic components, wherein a first seal provides an inner fluid-tight closure and a second outer closure provides a pressure seal to the vessels.

However, such embodiments have the disadvantage that the cover and/or seal is not permanently attached to the vessel and, therefore, may not be used for the automated handling of vessels comprising the repeated opening and closing of the cap portion without an increased probability of cross-contamination.

Thus, there is a need for providing methods and vessels for the fully automated handling of a liquid comprising more than one tube portion and a means for the handling including the repeated opening and closing of these tube portions in an easy and uncomplicated way.

### SUMMARY OF THE INVENTION

A main object of the invention, therefore, is to provide methods, instrumentation, and vessels for the fully automated handling of a liquid comprising more than one tube portion and a means for closing these tube portions in an easy and straightforward manner at the same time without the need for a complex constructive and mechanical solution leading to low reliability and high costs. Furthermore, the format and properties of the vessels should be optimized for performing polymerase chain reactions within the analytical instrument.

According to a first aspect of the invention, this problem is solved by a method for automated handling of a liquid in an analytical instrument, said method comprising
- providing on said analytical instrument
   - a container comprising
   - a cup portion held in a receptacle and having an upper opening,
      - a cap portion comprising a cover for closing said opening and being permanently attached to one side of said cup portion, and
      - a closure comprising a latch-fit located at a side of said cup portion by which the snap-latch of said cap portion is held so that the cover is vertically and reversibly closing said opening, said snap-latch comprising a sloped plain accessible by a handling head from said side of said cup and releasing the cap portion from the cup portion by horizontally asserting pressure to said plain, and
   - a handling head
- approaching said handling head to a side of said container having a closure by which said cover is vertically and reversibly fixed for closing said opening,
- horizontally asserting pressure by said handling head on said closure to release said cover from said vertical and reversible fixation, and optionally
- raising said cover by raising said handling head to open said cup.

According to a second aspect of the invention, the above aim is attained by using a container for the automated handling of a liquid on an analytical instrument, said container comprising a cup portion having an upper opening, a cap portion permanently attached to one side of said cup portion comprising a cover for closing said upper opening, and a closure comprising a latch-fit located at a side of said cup portion by which a snap-latch of said cap portion is held so that the cover is vertically and reversibly closing said opening, said snap-latch comprising a sloped plain accessible by a handling head from said side of said cup and releasing the cap portion from the cup portion by horizontally asserting pressure to said plain.

According to a third aspect of the invention, the above goal is met by using an instrument for automated handling of a liquid, said instrument comprising at least one container according to the invention and a handling head comprising a portion having a spike pointing in horizontal direction and a portion for vertically picking up said container.

The main advantage of the invention is that the movements required for opening and closing of the container allow for a simplified automated process and therefore, a simplified construction of the robotic performing these tasks as no rotary motions have to be carried out leading to a decrease in complexity of the diagnostic process, an increase in reliability, and thus, to a decrease in costs.

A further advantage of the invention is the matter that the cap portion of several cup portions can be opened or closed at the same time resulting in a reduced number of robotic movements also leading a decreased complexity and, thus, to an increased reliability and a higher operational capacity of the system for performing diagnostic processes.

An additional advantage of the invention is the permanent attachment of the cap portion to one side of the cup portion since no additional space within the system for performing fully automated diagnostic processes is required for the intermediate storage of the caps during the process is conducted. Furthermore, the erroneous closure of a cup portion with a cap is omitted.

A particular advantage of the production method is the permanent junction of the different components without the use of complex and time-consuming assembling methods (e.g. welding).

### BRIEF DESCRIPTION OF DRAWINGS

Preferred embodiments of the invention are described below, by way of example, with reference to the accompanying drawings, wherein:
Fig. 1 is a view of a first embodiment of the invention in its open position with the highlighted cup portion (1) comprising tubes (2) and latch-fits (3).
Fig. 2 is a view of a first embodiment of the invention in its open position with the highlighted cap portion (4) comprising snap-latches (5).
Fig. 3 is a view of a first embodiment of the invention in its open position consisting of six tubes (2). Cup portion and cap portion are connected via a bistable hinge (6). Partition bars (7) as well as the snap-latches (5) can be seen on the cap portion (4).
Fig. 4 is a view of a first embodiment of the invention in its closed position. On the upper side of the cap portion a barcode label (8) is attached.
Fig. 5 shows a tube according to a second embodiment of the invention.
Fig. 6 illustrates the opening (A) and the closing process (B) of a first embodiment of the invention with a handling head (9) comprising a spike (12).
Fig. 7A-D shows four cross sectional views through different embodiments of the invention with different cross sectional shapes of the sealing portion (14).
Fig. 8 is a view of a second embodiment of the invention in its open position. The lower side of the cap further comprises a convex or deepened ring area (13) for each cup portion (2).

### DESCRIPTION OF THE PREFERRED EMBODIMENTS

As used herein, the term 'analytical instrument' refers to an instrument capable of the automated handling and processing of a liquid. In a preferred embodiment the analytical instrument may be used for the fully automated performance of nucleic acid purification and/or amplification. In this connection a 'handling head' is considered to be a part of the analytical instrument able to be moved and controlled by the control unit of the analytical instrument in a horizontal plane encompassing at least one gripper, which can be moved by said control unit in vertical direction. In that, a 'gripper' is regarded as a tool to reversibly contain and hold a vessel or container, preferably having two movable parts comprising on one of said movable parts a spring mounted portion which is advantageous for the closing of a cap and on the other of said movable parts a step to allow the opening of the cap.

A container according to the invention is made up of a cup portion having an upper opening, a cap portion, which is permanently attached to one side of the cup portion, and a closure comprising a latch-fit located at the side of the cup portion by which the snap-latch of the cap portion is held so that the cover is vertically and reversibly closing the opening of the cup portion. The latch-fit and the snap-latch constitute a spring lock, which is designed to fulfill a reversible lock of the cap portion onto the cup portion and thus acts as a reversible closure of the container.

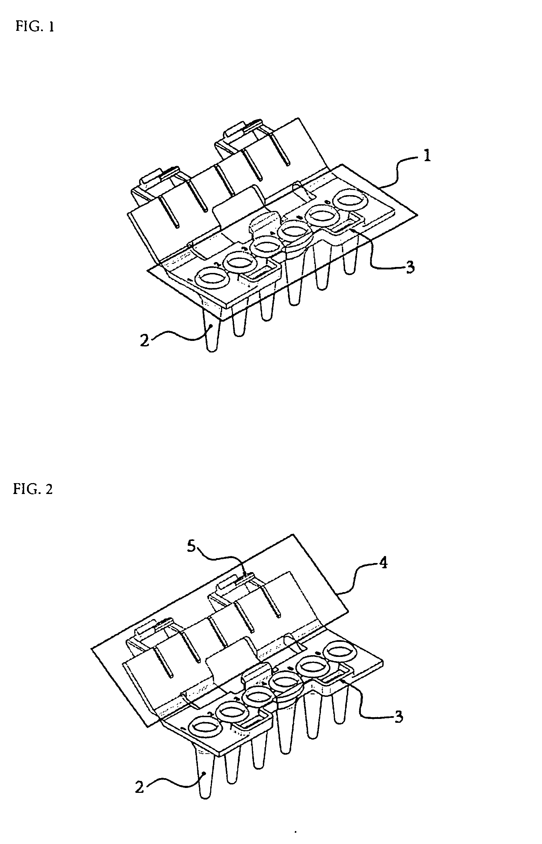

Fig. 1 shows a first embodiment of the container in its open position. The cup portion is highlighted (1) and contains a number of single tubes (2) in a specific arrangement, preferably in a linear arrangement, further comprising one or more latch-fits (3). The first embodiment of the container is also depicted in Fig. 2 highlighting the cap portion (4), which is permanently attached to one side of the above-mentioned cup portion and comprises a cover closing the upper openings of the cup portion. Furthermore, the cap portion exhibits one or more snap-latches (5) located in such a manner to reversibly engage into the latch-fits (3) of the cup portion, wherein the snap-latch (5) comprises a sloped plain accessible by a handling head from the side of the cup to allow releasing the cap portion from the cup portion when the handling head horizontally asserts pressure to the plain.

In a preferred embodiment the container consists of an alignment of 2 to 12 tubes each having an opening, wherein all openings can be closed and opened by the cover of the cap portion simultaneously and automatically.

In a specific embodiment of the invention the cap portion of the container is permanently attached to one side of the cup portion via a bistable hinge (6). A bistable hinge is formed using a specific configuration of the hinge elements. Herein, the first hinge element simply consists of a thin wall connecting one side of the cup portion to one side of the cap portion representing the rotation axis of the cap movement. The second hinge element is formed as a thin wall with very thin connections to the cup portion and the cap portion, respectively and represents a spring capable of holding the cap in two different stable positions. Thus, the combination of these two hinge elements results in a bistable hinge. Such bistable hinges are well known to persons skilled in the art. The advantage of this embodiment is that the open and the closed position of the cap portion are preferred and stable positions. Hence, even if the container has been closed and stored in the closed position for a long period of time before being transferred and used on the instrument, the container remains in the open position for further processing after being opened using the handling head.

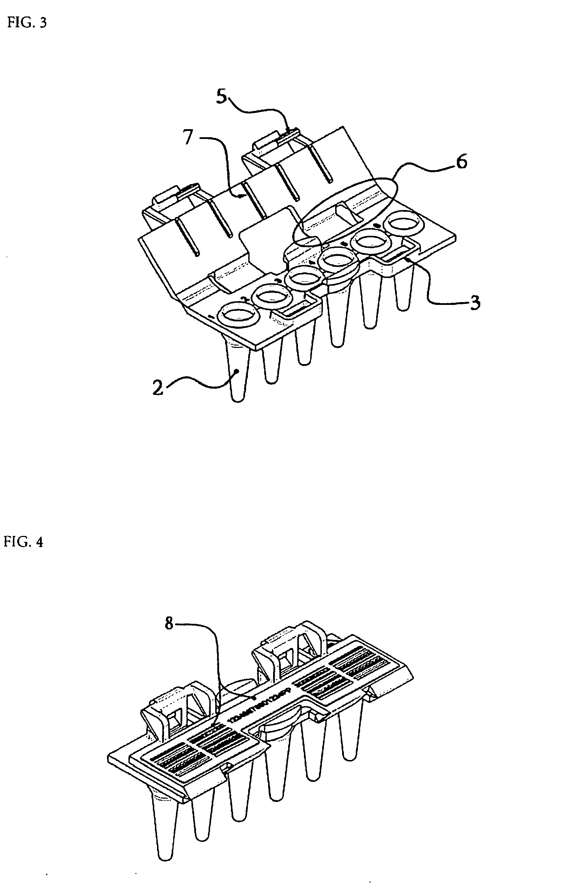

Fig. 3 shows another preferred embodiment of the container, wherein the cover of the cap portion comprises at least one partition bar (7). The partition bar is located on the inner part of the cap portion and is positioned in such a way to separate one upper opening of a cup portion from a second adjacent upper opening when the cover of the cap portion is tightly fixed to the cup portion. Therefore, the partition bar acts as a barrier for fluid deposit on the inner side of the cap portion caused by evaporation during thermal cycling processes and can be regarded as an additional advantageous means for the avoidance of cross-contamination between the reactions mixtures in adjacent cup portions.

In a further preferred embodiment of the invention the container comprises a cap portion that is non-transparent leading to the advantage of a reduction in auto-fluorescence and in light scattering as well as an improved recognition of the container when the container surpasses a light barrier.

A specific advantage of an embodiment of the container according to the invention, wherein the external part of the cap portion is formed as a planar surface is the possibility to mark this planar surface with a barcode (8) as depicted in Fig. 4 in order to allow for a definite identification of the container within the system while the fully automated diagnostic process is performed. In an even more preferred embodiment of the invention the barcode is divided into four parts with the top of the bars of each part facing towards the more narrow side rim and wherein said four parts of the barcode assemble one full length barcode. This embodiment is advantageous as it allows the insertion of the container into an analytic instrument lengthwise so that the barcode reader can be positioned in a space-saving manner for reading out the barcode.

Another embodiment of the container further comprises a seal portion (14) as an additional means for the avoidance of evaporation and thus, cross-contamination and for sealing the cup portion closed by the cap portion during processing and thermal cycling processes. The seal portion may be applied onto the inner side of the cap portion facing the cup portion or may be applied onto the cup portion around the upper opening facing the cap portion.

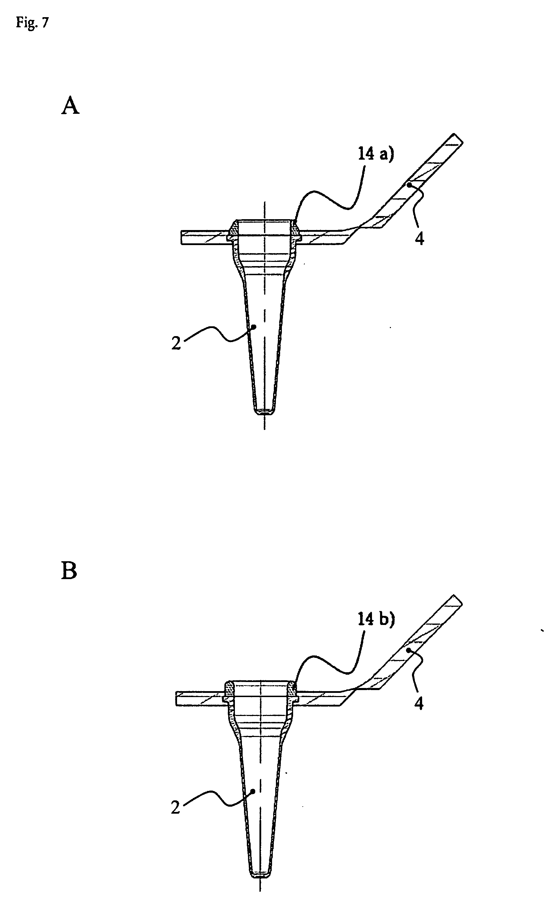

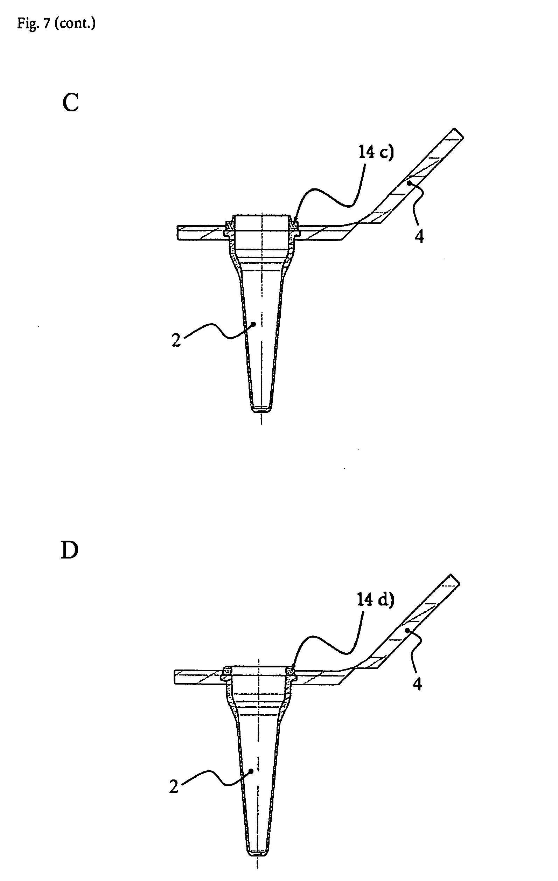

In particular embodiments of the invention the design of the seal portion (14) of the container may exhibit different cross sectional shapes as depicted in Fig. 7A-D. The cross sectional shape of the sealing portion is important to form a gas-tight seal. An optimal design of the cross sectional shape of the sealing portion is achieved, when the deformation of the sealing portion caused by the cap portion results in pressure-tight sealing, which means, that the tightness enhances with increasing inner pressure. Thus, as can be seen in Fig. 7A the cross section of the seal portion may be shaped as a rectangle with a chamfered outer edge leading to a deformation of the seal portion mainly to the inner area of the tube. With increasing inner pressure the deformed seal portion is being pressed against the cap even stronger so that a pressure-tight sealing is achieved. Another shape of the seal portion cross section can be seen in Fig. 7B, which does not have a clear tendency to be deformed to the inner area of the tube. However, this shape has a better stress distribution in the seal portion material, which might be an advantage, especially when the cap is kept closed for long periods of time. Fig. 7C shows a shape of the seal portion cross section with the same scope of the shape as shown in Fig. 7A but with a clear geometrical division of the shape into an inner sealing lip to be deformed to the inner area of the tube and a main part which acts as mechanical stop for the cap movement. The shape of the seal portion cross section shown in Fig. 7D is based on the known O-ring geometry, which is typically used as a standard in sealing issues.

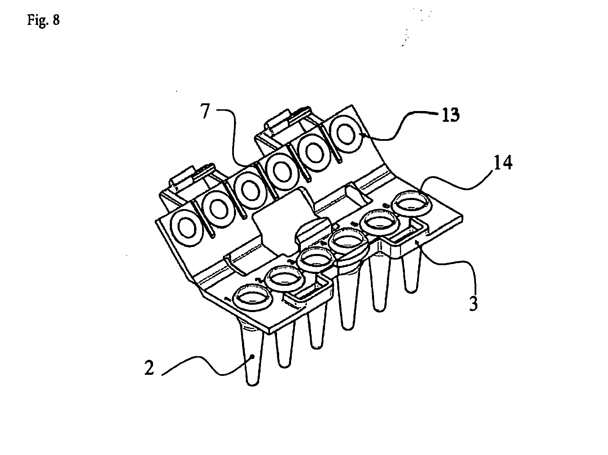

In another preferred embodiment as depicted in Fig. 8 the container on the lower side of its cap portion comprises a convex or deepened ring area (13). Said ring area (13) is designed to enable the precise adjustment of possible height differences of the seal portion (14) and/or to compensate a possible warpage of the whole container. Furthermore, it is very difficult to predict the precise movement of the cap portion only by the design of the hinge portions. Therefore, the convex or deepened ring areas are a mechanically simple and effective way of adjusting the actual movement of the cap portion in order to allow the closing of the upper opening of the cup portion by the cap portion even if the cap portion is not precisely located at its predetermined position when the cap portion is tightly fixed to said cup portion in the closed situation. Thus, such an embodiment is advantageous as an additional means to avoid the evaporation of liquid when the container is subjected to heating.

The cup portion of the container of a preferred embodiment is made up from a first rigid synthetic, while the cap portion is made up from a second rigid synthetic, and the seal portion is made up from a soft synthetic, wherein the rigid synthetic is a thermoplastic polymer material and the soft synthetic is an elastomer polymer material or a thermoplastic elastomer polymer material. In an even more preferred embodiment the cup portion, the cap portion, and the seal portion are integral elements of the container and are intractably connected.

In a further embodiment of the container the cup portion of the container comprises tubes having a substantially conical first wall portion and a substantially cylindrical downwards tapered second wall portion, wherein said first wall portion has a substantially thinner wall than said second wall portion and wherein the angle defined by the longitudinal axis through said substantially conically shaped first wall portion is between 7° and 15°, more preferably between 8° and 12°, and most preferably between 9° and 11°. Furthermore, the thickness of the first wall portion preferably is between 0.15 mm and 0.30 mm. In a preferred embodiment of such containers, the angle defined by the longitudinal axis through said substantially conically shaped first wall portion is about 10° and the thickness of the first wall portion is about 0.2 mm.

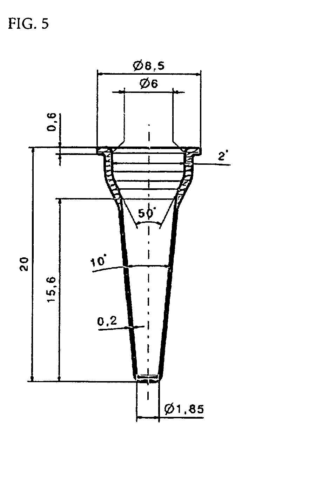

A tube according to the invention as depicted in Fig. 5 has an upper opening and consists of a substantially conical first wall portion and a substantially cylindrical downwards tapered second wall portion, wherein said first wall portion has a substantially thinner wall than said second wall portion and wherein the angle defined by the longitudinal axis through said substantially conically shaped first wall portion is between 7° and 15°, more preferably between 8° and 12°, and most preferably between 9° and 11°. Furthermore, the thickness of the first wall portion preferably is between 0.15 mm and 0.30 mm.

In a preferred embodiment of the tube, the angle defined by the longitudinal axis through said substantially conically shaped first wall portion is about 10° and the thickness of the first wall portion is between 0,15 mm and 0.30 mm, preferably about 0.2 mm.

In another preferred embodiment the tube further comprises a cap portion that is permanently attached to one side of the cup and comprises a cover capable of closing the upper opening of the cup. Preferably the cap portion is permanently attached to one side of the cup via a bistable hinge and is non-transparent.

An advantage of the container and the tube according to a certain embodiment of the invention is that the angle defined by the longitudinal axes through cup portion is between 7° and 15° leading to a better heat transfer from the heating/cooling block to the fluid and increased temperature homogeneity of the fluid and that the thickness of a first wall portion within the cup portion exhibits a thickness between 0.15 mm and 0.30 mm also leading to a better heat transfer from the heating/cooling block to the fluid and furthermore, to improved transparency characteristics advantageous for the detection measurement.

In another preferred embodiment of the tube, the tube has a cap portion that is permanently attached to one side of the cup portion comprising a cover capable of closing the upper opening of the cup portion. More preferably the cap portion is permanently attached to one side of the cup portion via a bistable hinge. These embodiments are advantageous as they can automatically be processed by an analytical instrument. In a specific embodiment of the invention the cap portion of the tube is non-transparent leading to the advantage of a reduction in auto-fluorescence and in light scattering as well as an improved recognition of the container when the container surpasses a light barrier.

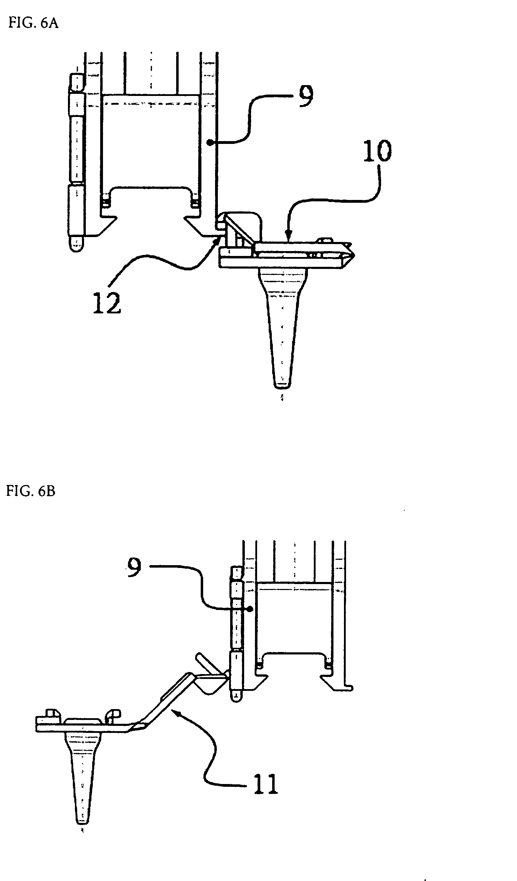

The method for the automated handling of a liquid in an analytical instrument is displayed in Fig. 6. The automated opening of the container in the closed position (10) is shown in Fig. 6A. The handling head (9) approaches the container to the side, where the container exhibits a closure by which the cover of the container is vertically and reversibly fixed to the cup portion. Subsequently, the handling head (9), in a preferred embodiment containing a spike, horizontally asserts pressure on said closure to release said cover from said vertical and reversible fixation, and may optionally raise said cover by raising said handling head to open said cup portion.

The closing of a container in the open position (11) is shown in Fig. 6B. Here, the handling head (9) approaches the container to the side, where the latch-fit from the closure of the opened cover is pointing to. Subsequently, the handling head (9) horizontally moves directly above the container thereby pushing the cover above the upper opening of the cup portion and bringing the snap-latches of the cover in proximity to the latch-fit of the cup portion. In a second vertical move the handling head now asserts pressure on said cover to enable the engagement of the snap-latches into the latch-fits.

In a preferred embodiment of the method the handling head further comprises a gripper in order to pick up and transport the container from one position, e.g. the receptacle, within the analytical instrument to another.

In a specific embodiment of the method according to the invention the cup portion of the container is reversibly held down to the receptacle by a movable down holding clamp, while the handling head approaches and operates on said container. This embodiment has the advantage that the container is fixed to the receptacle during the operation of the handling head and while the cap portion of the container is not firmly fixed to the cup portion of the container avoiding the spill of fluid and thus, depleting a source for cross-contamination of the reaction mixtures.

Another embodiment of the invention is an instrument for automated handling of a liquid that encompasses a handling head comprising a portion having a spike pointing in horizontal direction (see (12) in Fig. 6) and a portion for vertically picking up items, which in certain embodiments may be pipette tips or containers according to the invention. More preferably the instrument further comprises a control unit to direct horizontal and vertical movement of said handling head.

Vessels for the use in the method or the instrument of the invention may be manufactured using a production method. This production method, the so-called multi component injection molding technology, allows the production of said vessels using different materials in one mold. In a first step a first component is injected into the first cavity of the multi component mold. Instead of ejecting this component after opening the mold as done in conventional injection molding the first component remains in one side of the first cavity either in the injection side or in the movable side of the mold. Subsequently, either the injection side or the movable side of the mold is rotated around the injection axis (e.g. an angle of 120° for three components) so that the first cavity with the first component still fixed in faces the second cavity of the other side of the mold. In a second step a second component is filled into the second cavity. In doing so a permanent junction between the first and the second component is obtained when appropriate materials are processed. During this second step the first cavity is filled with the first component for the second time. Hence, either the injection side or the movable side of the mold is rotated around the injection axis (e.g. angle of 120° for three components) for the second time so that the first cavity with the first component still fixed in faces the second cavity and the second cavity with the first and the second component faces the third cavity of the other side of the mold. In a third step a third component is injected. Thus, after three steps the first three-component vessel is completed. Therefore, in each three-step cycle one complete three-component part is produced. In summary, such a production method for a vessel, wherein the vessel is made up of three plastic materials and produced in one mold comprises
- injecting a first component into a first cavity of the multi component mold,
- rotating the mold around the injection axis with said first component remaining in said first cavity and after rotating the mold facing a second cavity,
- injecting a second component into said second cavity forming a permanent junction between said first and said second component,
- rotating the mold around the injection axis with said first component remaining in said first cavity and after rotating the mold facing a third cavity, and
- injecting a third component into said third cavity permanently connecting said third component to the component consisting of said first and said second component.

In a specific embodiment the vessel manufactured by the production method is the container of the invention. In another specific embodiment where the vessel is the container of the invention said container contains a seal portion located between the cup portion and the cap portion when said container is in the locked position.

A vessel manufactured according to the production method comprises a cup portion molded from a first rigid synthetic, a cap portion molded from a second rigid synthetic, and a seal portion molded from a soft synthetic, wherein the rigid synthetic is a thermoplastic polymer material and the soft synthetic is an elastomer polymer material or a thermoplastic elastomer polymer material. Furthermore, the cup portion, the cap portion, and the seal portion are integral elements of the vessel and are intractably connected. Disassembly of the three integral elements would lead to a destruction of the vessel. Alternatively, the vessel may also be assembled after manufacturing the single materials by conventional injection molding.

### Legend to numbers used in the figures:

- 1: cup portion
- 2: tube
- 3: latch-fit
- 4: cap portion
- 5: snap-latch
- 6: bistable hinge
- 7: partition bar
- 8: barcode label
- 9: handling head
- 10: container in closed position
- 11: container in open positon
- 12: spike of handling head
- 13: convex or deepened ring area
- 14: seal portion

## Claims

1. A method for automated handling of a liquid in an analytical instrument, said method comprising
- providing on said analytical instrument
- a container comprising
- a cup portion held in a receptacle and having an upper opening,
- a cap portion comprising a cover for closing said opening and being permanently attached to one side of said cup portion, and
- a closure comprising a latch-fit located at a side of said cup portion by which the snap-latch of said cap portion is held so that the cover is vertically and reversibly closing said opening, said snap-latch comprising a sloped plain accessible by a handling head from said side of said cup and releasing the cap portion from the cup portion by horizontally asserting pressure to said plain, and
- a handling head
- approaching said handling head to a side of said container having a closure by which said cover is vertically and reversibly fixed for closing said opening,
- horizontally asserting pressure by said handling head on said closure to release said cover from said vertical and reversible fixation, and optionally
- raising said cover by raising said handling head to open said cup portion.

2. The method of claim 1, wherein said cap is permanently attached to one side of said cup via a bistable hinge.

3. The method of claim 1 or 2, wherein said cap is reversibly attached to said cup portion via a spring lock.

4. The method according to any of claims I to 3 further comprising closing said opening with said cap using said handling head.

5. The method according to any of claims 1 to 4 further comprising picking up said container from said receptacle.

6. The method according to any of claims 1 to 5, wherein said handling head further comprises a gripper for picking up and transporting said container from said receptacle.

7. The method according to any of claims 1 to 6, wherein said container comprises between 2 and 12 cup portions, each having an opening, and at least one cap portion comprising a cover closing said openings.

8. The method according to any of claims 1 to 7, wherein the cup portion of said container is reversibly held down to the receptacle by a movable down holding clamp while said handling head approaches and operates on said container.

9. A container for automated handling of a liquid on an analytical instrument, said container comprising
- a cup portion having an upper opening,
- a cap portion permanently attached to one side of said cup portion comprising a cover for closing said upper opening, and
- a closure comprising a latch-fit located at a side of said cup portion by which the snap-latch of said cap portion is held so that the cover is vertically and reversibly closing said opening, said snap-latch comprising a sloped plain accessible by a handling head from said side of said cup and releasing the cap portion from the cup portion by horizontally asserting pressure to said plain.

10. The container according to claim 9, wherein the cover of said cap portion comprises at least one partition bar positioned in such a way to separate one upper opening of a cup portion from a second adjacent upper opening when said cover of said cap portion is tightly fixed to said cup portion.

11. The container according to any of claims 9 and 10, wherein said cap is reversibly attached to said cup portion via a spring lock.

12. The container according to any of claims 9 to 11, wherein said cap portion is permanently attached to one side of said cup via a bistable hinge.

13. The container according to any of claims 9 to 12, wherein the cap portion is non-transparent.

14. The container according to any of claims 9 to 13, wherein the external part of said cap portion comprises a barcode, said barcode being divided into four parts with the top of the bars of each part facing towards the more narrow side rim and wherein said four parts of the barcode assemble one full length barcode.

15. The container according to any of claims 9 to 14, wherein the container additionally contains a seal portion located between the cup portion and the cap portion, when said cover of said cap portion is tightly fixed to said cup portion.

16. The container according to claim 15, wherein the cup portion is made up from a first rigid synthetic, the cap portion comprising the cover closing is made up from a second rigid synthetic, and the seal portion is made up from a soft synthetic.

17. The container according to claim 15 or 16, wherein the seal portion is applied onto said cup portion around said upper opening facing the cap portion.

18. The container according to any of claims 9 to 17, wherein the cup portion consisting of a substantially conical first wall portion and a substantially cylindrical downwards tapered second wall portion, wherein said first wall portion has a substantially thinner wall than said second wall portion and wherein the angle defined by the longitudinal axis through said substantially conically shaped first wall portion is between 7° and 15°.

19. The container according to claim 18, wherein the angle defined by the longitudinal axis through said substantially conically shaped first wall portion is about 10°.

20. The container according to claim 18 or 19, wherein the thickness of said first wall portion is between 0.15 mm and 0.30 mm.

21. The container according to claim 18 or 19, wherein the thickness of said first wall portion is about 0.2 mm.

22. The container according to any of claims 9 to 21, wherein the container consists of an alignment of 2 to 12 tubes each having an opening, wherein all openings can be closed and opened by the cover of the cap portion simultaneously and automatically

23. An instrument for automated handling of a liquid, said instrument comprising at least one container according to any one of claims 9 to 22 and a handling head comprising a portion having a spike pointing in horizontal direction and a portion for vertically picking up said container.

24. The instrument according to claim 23, further comprising a control unit to direct horizontal and vertical movement of said handling head.

## Patentansprüche

1. Verfahren zur automatisierten Handhabung einer Flüssigkeit in einem Analysegerät, wobei das Verfahren Folgendes umfasst:
- Bereitstellen am Analysegerät:
- eines Behälters, umfassend
- einen in einem Behältnis gehaltenen Becherteil mit einer oberen Öffnung,
- einen Kappenteil, der eine Abdeckung zum Schließen der Öffnung umfasst und dauerhaft an einer Seite des Becherteils befestigt ist, und
- einen Verschluss, der ein Verriegelungsstück an einer Seite des Becherteils umfasst, durch das die Schnapp-Verriegelung des Kappenteils so gehalten wird, dass die Abdeckung die Öffnung vertikal und reversibel schließt, wobei die Schnapp-Verriegelung eine geneigte Ebene umfasst, die von einem Bedienkopf von der Seite des Bechers zugänglich ist und den Kappenteil von dem Becherteil freigibt, indem an die Ebene ein horizontaler Druck angelegt wird, und
- eines Bedienkopfs,
- Näherbringen des Bedienkopfs zu einer Seite des Behälters mit einem Verschluss, durch den die Abdeckung vertikal und reversibel zum Schließen der Öffnung befestigt ist,
- horizontales Anlegen eines Drucks durch den Bedienkopf auf den Verschluss, um die Abdeckung aus der vertikalen und reversiblen Befestigung zu lösen, und wahlweise
- Anheben der Abdeckung durch Anheben des Bedienkopfs zum Öffnen des Becherteils.

2. Verfahren nach Anspruch 1, wobei die Kappe über ein bistabiles Scharnier dauerhaft an einer Seite des Bechers befestigt ist.

3. Verfahren nach Anspruch 1 oder 2, wobei die Kappe über ein Schnappschloss reversibel am Becherteil befestigt ist.

4. Verfahren nach einem der Ansprüche 1 bis 3, das weiterhin das Schließen der Öffnung mit der Kappe unter Verwendung des Bedienkopfs umfasst.

5. Verfahren nach einem der Ansprüche 1 bis 4, das weiterhin das Aufnehmen des Behälters aus dem Behältnis umfasst.

6. Verfahren nach einem der Ansprüche 1 bis 5, wobei der Bedienkopf weiterhin einen Greifer zum Aufnehmen und Transportieren des Behälters aus dem Behältnis umfasst.

7. Verfahren nach einem der Ansprüche 1 bis 6, wobei der Behälter zwischen 2 und 12 Becherteile, die jeweils eine Öffnung aufweisen, und mindestens einen Kappenteil, der eine die Öffnungen schließende Abdeckung aufweist, umfasst.

8. Verfahren nach einem der Ansprüche 1 bis 7, wobei der Becherteil des Behälters durch eine bewegliche Niederhalteklemme reversibel nach unten zu dem Behältnis gehalten wird, während sich der Bedienkopf dem Behälter nähert und daran wirkt.

9. Behälter zur automatisierten Handhabung einer Flüssigkeit in einem Analysegerät, wobei der Behälter Folgendes umfasst:
- einen Becherteil mit einer oberen Öffnung,
- einen Kappenteil, der dauerhaft an einer Seite des Becherteils befestigt ist und eine Abdeckung zum Schließen der oberen Öffnung umfasst, und
- einen Verschluss, der ein Verriegelungsstück umfasst, das an einer Seite des Becherteils angeordnet ist und durch das die Schnapp-Verriegelung des Kappenteils so gehalten wird, dass die Abdeckung die Öffnung vertikal und reversibel schließt, wobei die Schnapp-Verriegelung eine geneigte Ebene umfasst, die von einem Bedienkopf von der Seite des Bechers zugänglich ist und den Kappenteil von dem Becherteil freigibt, indem an die Ebene ein horizontaler Druck angelegt wird.

10. Behälter nach Anspruch 9, wobei die Abdeckung des Kappenteils mindestens eine Trennstange umfasst, die so positioniert ist, dass sie eine obere Öffnung eines Becherteils von einer zweiten, benachbarten oberen Öffnung trennt, wenn die Abdeckung des Kappenteils fest an dem Becherteil angebracht ist.

11. Behälter nach einem der Ansprüche 9 und 10, wobei die Kappe über ein Schnappschloss reversibel an dem Becherteil befestigt ist.

12. Behälter nach einem der Ansprüche 9 bis 11, wobei der Kappenteil über ein bistabiles Scharnier dauerhaft an einer Seite des Bechers befestigt ist.

13. Behälter nach einem der Ansprüche 9 bis 12, wobei der Kappenteil undurchsichtig ist.

14. Behälter nach einem der Ansprüche 9 bis 13, wobei der äußere Teil des Kappenteils einen Strichcode umfasst, wobei der Strichcode in vier Teile unterteilt ist, wobei der obere der Striche jedes Teils zu dem schmaleren Seitenrand weist und wobei die vier Teile der Strichcodeanordnung einen Strichcode voller Länge bilden.

15. Behälter nach einem der Ansprüche 9 bis 14, wobei der Behälter darüber hinaus einen Dichtungsteil enthält, der zwischen dem Becherteil und dem Kappenteil angeordnet ist, wenn die Abdeckung des Kappenteils fest an dem Becherteil angebracht ist.

16. Behälter nach Anspruch 15, wobei der Becherteil aus einem ersten starren Kunststoff hergestellt ist, wobei der den Abdeckungsverschluss umfassende Kappenteil aus einem zweiten starren Kunststoff hergestellt ist und der Dichtungsteil aus einem weichen Kunststoff hergestellt ist.

17. Behälter nach Anspruch 15 oder 16, wobei der Dichtungsteil um die zu dem Kappenteil weisende obere Öffnung herum an dem Becherteil angebracht ist.

18. Behälter nach einem der Ansprüche 9 bis 17, wobei der Becherteil aus einem im Wesentlichen sich verjüngenden ersten Wandteil und einem im Wesentlichen zylindrischen, sich nach unten verjüngenden zweiten Wandteil besteht, wobei der erste Wandteil eine wesentlich dünnere Wand aufweist als der zweite Wandteil und wobei der durch die Längsachse durch den im Wesentlichen sich verjüngend geformten ersten Wandteil gebildete Winkel zwischen 7° und 15° liegt.

19. Behälter nach Anspruch 18, wobei der durch die Längsachse durch den im Wesentlichen sich verjüngend geformten ersten Wandteil gebildete Winkel ca. 10° beträgt.

20. Behälter nach Anspruch 18 oder 19, wobei die Dicke des ersten Wandteils zwischen 0,15 mm und 0,30 mm liegt.

21. Behälter nach Anspruch 18 oder 19, wobei die Dicke des ersten Wandteils ca. 0,2 mm beträgt.

22. Behälter nach einem der Ansprüche 9 bis 21, wobei der Behälter aus einer Anordnung von 2 bis 12 Röhrchen besteht, die jeweils eine Öffnung aufweisen, wobei alle Öffnungen durch die Abdeckung des Kappenteils gleichzeitig und automatisch geschlossen und geöffnet werden können.

23. Gerät zur automatisierten Handhabung einer Flüssigkeit, wobei das Gerät mindestens einen Behälter nach einem der Ansprüche 9 bis 22 und einen Bedienkopf umfasst, der einen Teil mit einer in Horizontalrichtung weisenden Spitze und einen Teil zum vertikalen Aufnehmen des Behälters umfasst.

24. Gerät nach Anspruch 23, das weiterhin eine Steuereinheit zur direkten Horizontal- und Vertikalbewegung des Bedienkopfs umfasst.

## Revendications

1. Procédé pour une manipulation automatisée d'un liquide dans un instrument analytique, ledit procédé comprenant
- la prévision sur ledit instrument analytique
- d'un récipient comprenant
- une partie de cuvette maintenue dans un réceptacle et ayant une ouverture supérieure,
- une partie de coiffe comprenant un couvercle pour fermer ladite ouverture et étant fixée de façon permanente sur un côté de ladite partie de cuvette, et
- une fermeture comprenant une serrure de verrouillage située sur un côté de ladite partie de cuvette par laquelle la fermeture par emboîtement de ladite partie de coiffe est maintenue de sorte que le couvercle ferme verticalement et de façon réversible ladite ouverture, ladite fermeture par emboîtement comprenant un plan incliné accessible par une tête de manipulation dudit côté de ladite cuvette et libérant la partie de coiffe de la partie de cuvette en exerçant horizontalement une pression sur ledit plan, et
- d'une tête de manipulation
- l'approche de ladite tête de manipulation sur un côté dudit récipient ayant une fermeture par laquelle ledit couvercle est fixé verticalement et de façon réversible pour fermer ladite ouverture,
- l'exercice, horizontalement, d'une pression par ladite tête de manipulation sur ladite fermeture pour libérer ledit couvercle de ladite fixation verticale et réversible, et facultativement
- la levée dudit couvercle en levant ladite tête de manipulation pour ouvrir ladite partie de cuvette.

2. Procédé selon la revendication 1, dans lequel ladite coiffe est fixée de façon permanente sur un côté de ladite cuvette par l'intermédiaire d'une charnière bistable.

3. Procédé selon la revendication 1 ou 2, dans lequel ladite coiffe est fixée de façon réversible à ladite partie de cuvette par l'intermédiaire d'une serrure à ressort.

4. Procédé selon l'une quelconque des revendications 1 à 3 comprenant en outre la fermeture de ladite ouverture avec ladite coiffe en utilisant ladite tête de manipulation.

5. Procédé selon l'une quelconque des revendications 1 à 4 comprenant en outre l'enlèvement dudit récipient dudit réceptacle.

6. Procédé selon l'une quelconque des revendications 1 à 5, dans lequel ladite tête de manipulation comprend en outre un préhenseur pour enlever et transporter ledit récipient dudit réceptacle.

7. Procédé selon l'une quelconque des revendications 1 à 6, dans lequel ledit récipient comprend entre 2 et 12 parties de cuvette, chacune ayant une ouverture, et au moins une partie de coiffe comprenant un couvercle fermant lesdites ouvertures.

8. Procédé selon l'une quelconque des revendications 1 à 7, dans lequel la partie de cuvette dudit récipient est maintenue de façon réversible vers le bas sur le réceptacle par un système de maintien vers le bas mobile tandis que ladite tête de manipulation approche dudit et fonctionne sur ledit récipient.

9. Récipient pour une manipulation automatisée d'un liquide sur un instrument analytique, ledit récipient comprenant
- une partie de cuvette ayant une ouverture supérieure,
- une partie de coiffe fixée de façon permanente sur un côté de ladite partie de cuvette comprenant un couvercle pour fermer ladite ouverture supérieure, et
- une fermeture comprenant une serrure de verrouillage située sur un côté de ladite partie de cuvette par laquelle la fermeture par emboîtement de ladite partie de coiffe est maintenue de sorte que le couvercle ferme verticalement et de façon réversible ladite ouverture, ladite fermeture par emboîtement comprenant un plan incliné accessible par une tête de manipulation dudit côté de ladite cuvette et libérant la partie de coiffe de la partie de cuvette en exerçant horizontalement une pression sur ledit plan.

10. Récipient selon la revendication 9, dans lequel le couvercle de ladite partie de coiffe comprend au moins une barre de cloisonnement positionnée de façon à séparer une ouverture supérieure d'une partie de cuvette d'une deuxième ouverture supérieure adjacente lorsque ledit couvercle de ladite partie de coiffe est fermement fixé sur ladite partie de cuvette.

11. Récipient selon l'une quelconque des revendications 9 et 10, dans lequel ladite coiffe est fixée de façon réversible à ladite partie de cuvette par l'intermédiaire d'une serrure à ressort.

12. Récipient selon l'une quelconque des revendications 9 à 11, dans lequel ladite partie de coiffe est fixée de façon permanente sur un côté de ladite cuvette par l'intermédiaire d'une charnière bistable.

13. Récipient selon l'une quelconque des revendications 9 à 12, dans lequel ladite partie de coiffe est non transparente.

14. Récipient selon l'une quelconque des revendications 9 à 13, dans lequel la partie externe de ladite partie de coiffe comprend un code à barres, ledit code à barres étant divisé en quatre parties avec le haut des barres de chaque partie faisant face vers le rebord de côté le plus étroit et dans lequel lesdites quatre parties du code à barres assemblent un code à barres de pleine longueur.

15. Récipient selon l'une quelconque des revendications 9 à 14, dans lequel le récipient contient en outre une partie d'étanchéité située entre la partie de cuvette et la partie de coiffe, lorsque ledit couvercle de ladite partie de coiffe est fermement fixé sur ladite partie de cuvette.

16. Récipient selon la revendication 15, dans lequel la partie de cuvette est constituée d'un premier synthétique rigide, la partie de coiffe comprenant la fermeture de couvercle est constituée d'un deuxième synthétique rigide, et la partie d'étanchéité est constituée d'un synthétique souple.

17. Récipient selon la revendication 15 ou 16, dans lequel la partie d'étanchéité est appliquée sur ladite partie de cuvette autour de ladite ouverture supérieure faisant face à la partie de coiffe.

18. Récipient selon l'une quelconque des revendications 9 à 17, dans lequel la partie de cuvette consistant en une première partie de paroi substantiellement conique et une deuxième partie de paroi diminuant vers le bas substantiellement cylindrique, dans lequel ladite première partie de paroi a une paroi substantiellement plus mince que ladite deuxième partie de paroi et dans lequel l'angle défini par l'axe longitudinal à travers ladite première partie de paroi de forme substantiellement conique est entre 7° et 15°.

19. Récipient selon la revendication 18, dans lequel l'angle défini par l'axe longitudinal à travers ladite première partie de paroi de forme substantiellement conique est environ 10°.

20. Récipient selon la revendication 18 ou 19, dans lequel l'épaisseur de ladite première partie de paroi est entre 0,15 mm et 0,30 mm.

21. Récipient selon la revendication 18 ou 19, dans lequel l'épaisseur de ladite première partie de paroi est environ 0,2 mm.

22. Récipient selon l'une quelconque des revendications 9 à 21, dans lequel le récipient consiste en un alignement de 2 à 12 tubes ayant chacun une ouverture, dans lequel toutes les ouvertures peuvent être fermées et ouvertes par le couvercle de la partie de coiffe simultanément et automatiquement.

23. Instrument pour une manipulation automatisée d'un liquide, ledit instrument comprenant au moins un récipient selon l'une quelconque des revendications 9 à 22, et une tête de manipulation comprenant une partie ayant une pointe pointant dans le sens horizontal et une partie pour enlever verticalement ledit récipient.

24. Instrument selon la revendication 23, comprenant en outre une unité de commande pour diriger le mouvement horizontal et vertical de ladite tête de manipulation.
